# EUROPEAN PATENT APPLICATION

(11) **EP 3 812 187 A1**
(43) Date of publication of application: **28.04.2021**
(21) Application number: 19204447.7
(22) Date of filing: 21.10.2019
(51) Int. Cl.: B60K 1/00, B60K 1/02, B60K 17/34, B60K 17/356, B60K 17/36

(54) **POWERTRAIN ARRANGEMENT**

(71) Applicant: Sandvik Mining and Construction Oy, 33330 Tampere (FI)
(72) Inventor: Anttonen, Pekka, 33330 Tampere (FI); Juntunen, Raimo, 33330 Tampere (FI); Rekola, Jenni, 33330 Tampere (FI)
(74) Representative: Sandvik

(57) **Abstract**

A powertrain arrangement of a mobile work machine (M). The arrangement (100) comprises a first and a second axle arrangements (1, 2), arranged transversely to a longitudinal axis of the work machine (M), and an electric motor unit (3), comprising a first output shaft (4) in a first end of the electric motor unit (3), and a second output shaft (5) in a second end of the electric motor unit (3). The electric motor unit (3) is arranged between the first and the second axle arrangements (1, 2), the first axle arrangement (1) being connected to and rotated by the first output shaft (4), and the second axle arrangement (2) being connected to and rotated by the second output shaft (5).

## Description

### BACKGROUND

The invention relates to a powertrain arrangement of a mobile work machine.

In powertrain systems of mobile work machines, a combustion engine or electric motor is connected to cardan axles using a drop box. A problem with these systems is that the drop box presents fairly high power losses due to mechanical friction and oil viscosity in the drop box.

### BRIEF DESCRIPTION

Viewed from an aspect, there can be provided a powertrain arrangement of a mobile work machine, the arrangement comprising a first and a second axle arrangements, arranged transversely to a longitudinal axis of the work machine, an electric motor unit, comprising a first output shaft in a first end of the electric motor unit, and a second output shaft in a second end of the electric motor unit, the electric motor unit being arranged between the first and the second axle arrangements, the first axle arrangement being connected to and rotated by the first output shaft, and the second axle arrangement being connected to and rotated by the second output shaft.

Thereby a powertrain arrangement having increased efficiency and an inexpensive, light and compact structure may be achieved.
The arrangement is characterised by what is stated in the independent claim. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

In one embodiment, at least one of the first and the second axle arrangements of the powertrain arrangement is connected to the output shaft by a cardan axle.

An advantage is that the electric motor unit may be arranged at a distance from the at least one of the first and the second axle arrangements.

In one embodiment, the powertrain arrangement comprises a first and a second cardan axles, wherein the first axle arrangement is arranged to be rotated by the first cardan axle, and the second axle arrangement is arranged to be rotated by the second cardan axle, and wherein said first cardan axle is connected to and rotated by the first output shaft and said second cardan axle is connected to and rotated by the second output shaft of the electric motor. An advantage is that the electric motor unit may be arranged at a distance from both the first and the second axle arrangements.

In one embodiment, the cardan axle of the powertrain arrangement is arranged to drive one axle arrangement only. An advantage is that the structure is simple.

In one embodiment, at least one of the output shafts is arranged to drive at least two axles. An advantage is that axle arrangements having high load-carrying capacity, such as a tandem axle, may be driven.

In one embodiment, the electric motor of the powertrain arrangement is a solid shaft motor. An advantage is that the motor type is commonly used.

In one embodiment, the electric motor of the powertrain arrangement is a hollow shaft motor. An advantage is that the shaft is simple to connect with a cardan axle by inserting the cardan in the hollow shaft, and that a compact structure of the motor/cardan-combination may be achieved.

In one embodiment, the electric motor of the powertrain arrangement is a permanent magnet motor. An advantage is that a very compact motor structure may be achieved. Furthermore, the design of the motor may be optimized by selecting a radial flux or an axial flux type of permanent magnet motor.

In one embodiment, the electric motor of the powertrain arrangement is a reluctance motor. An advantage is that the efficiency of the motor may be high since there is no need to magnetize the rotor thereof. Another advantage is that risk for a rotor overheating is low, and thus a very reliable motor may be achieved.

In one embodiment, the electric motor of the powertrain arrangement is an induction motor. An advantage is that it is capable to generate substantial overtorque that may help movements of the work machine e.g. on rough terrain.

In one embodiment, the powertrain arrangement comprises a combustion engine and an electric generator is arranged to create electricity for the electric motor. An advantage is that creating electrical energy for the electric motor unit may be easier with the combustion engine and the electric generator in challenging circumstances of the mobile work machine.

In one embodiment, the powertrain arrangement comprises a battery for supplying electrical energy for the electric motor. An advantage is that storing and supplying electrical energy for the electric motor unit may be easier with the battery in challenging circumstances of the mobile work machine.

In one embodiment, the powertrain arrangement comprises an electric cable arranged for supplying electrical energy for use in the arrangement. An advantage is that the mobile work machine does not need to produce the energy used itself, but electric cable can supply electrical energy from external source.

In one embodiment, the powertrain arrangement comprises at least two electric motors. An advantage is that extra power needed e.g. in uphill slopes may be created.

### BRIEF DESCRIPTION OF FIGURES

Some embodiments illustrating the present disclosure are described in more detail in the attached drawings, in which
Figure 1 is a schematic top view of a powertrain arrangement of a mobile work machine,
Figure 2 is a schematic side view of another powertrain arrangement,
Figure 3 is a schematic side view of a third powertrain arrangement of a mobile work machine, and
Figure 4 is a schematic side view of a fourth powertrain arrangement of a mobile work machine.

In the figures, some embodiments are shown simplified for the sake of clarity. Similar parts are marked with the same reference numbers in the figures.

### DETAILED DESCRIPTION

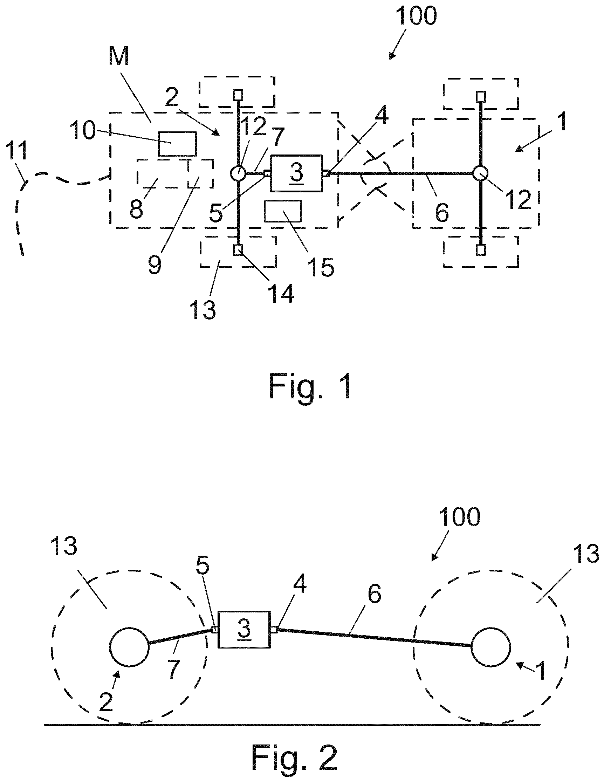

**Figure 1** is a schematic top view of a powertrain arrangement of a mobile work machine. The mobile work machine M (shown by dashed line) may be any type of a utility vehicle, such as a tractor, a truck, a farming machine, a forestry machine etc. According to an aspect of the invention, the work machine M is a mine machine or a construction machine. In mines - such as underground mines and surface mines - and at other work sites different type of work machines are used. The work machine is provided with one or more working device(s). For instance, the mine machine may be provided with working device(s) for executing mine work task at a work site. The mine machine or a construction machine may be e.g. a rock drilling rig, a development drill, a tunneling drilling machine, a surface drilling machine, a bolting or reinforcing vehicle, a rock removal machine, a longhole drill rig, an explosive charging machine, a loader, a transport vehicle, a loading or hauling machine, setting vehicles of gallery arcs or nets, a concrete spraying machine, a crusher or a measuring vehicle.

The mobile work machine M is an electrically driven machine that comprises at least one electric motor unit 3. The electric motor unit3 comprises a first output shaft 4 in a first end of the electric motor unit3, and a second output shaft 5 in a second end of the electric motor unit 3, the output shafts 4, 5 being arranged to give rotational mechanical force to be used in the mobile work machine M. The electric motor unit 3 is arranged between the first and the second axle arrangements 1, 2.

The electric motor unit 3 of the powertrain arrangement of the mobile work machine M may comprise any kind of electric motor which have desired range of rotation speeds. The electric motor can be for example a solid shaft motor, a hollow shaft motor, and the motor type e.g. a permanent magnet motor, an induction motor or a reluctance motor. In an embodiment, the electric motor 3 is a through-shaft motor, i.e. it comprises just one shaft that extends through the motor. It is to be noted that the through-shaft motor is also referred to as a "double drive end motor" or an "axle extension in non-drive end motor".

In another embodiment, the electric motor unit 3 comprises two shafts arranged consecutively and coaxially in the motor. In an embodiment, there are two electric motors in the electric motor unit 3 and one of the shafts may be rotated with different speed than another shaft.
The powertrain arrangement 100 of the mobile work machine M in Figure 1 comprises a first and a second axle arrangements 1, 2, an electric motor unit 3, output shafts 4, 5, cardan axles 6, 7, a battery 10, two differentials 12, four hubs 14, and an inverter 15. All the parts showed in Figure 1 are not necessarily needed in the powertrain arrangement described in the claims of this document, and the configuration of the arrangement can be adapted as needed.

The first and the second axle arrangements 1, 2, are arranged transversely to a longitudinal axis of the work machine M. The first axle arrangement 1 is connected to and rotated by the first output shaft 4, and the second axle arrangement 2 is connected to and rotated by the second output shaft 5.

The axle arrangement 1, 2 comprises typically at least one differential 12 that allows drive axles of the axle arrangement to rotate at different speeds such that the outer drive wheel may rotate faster than the inner drive wheel during a turn. However, in some embodiments, there is no differential in the axle arrangement.

The hub 14 may comprise a gear that changes gear ratio. However, in another embodiment, the hub 14 may transmit power without changing gear ratio.

In the arrangement 100 shown in Figure 1, the first axle arrangement 1 is connected to the electric motor unit 3, or its first output shaft 4 thereof, by a first cardan axle 6, and the second axle arrangement 2 is connected to the electric motor unit 3, or its second output shaft 4 thereof, by a second cardan axle 7.

In an embodiment, the cardan axle 6, 7 has a constant length. In another embodiment, the length of the cardan axle 6, 7 has a structure (not shown) that allows the axle to vary its length.

In an embodiment, the mobile work machine M has a hybrid drive unit, in which the powertrain arrangement 100 comprises a combustion engine 8 being arranged to use an electric generator 9. The electric generator 9 creates electricity for the electric motor unit 3. In some embodiments, the hybrid drive unit further comprises a battery 10 for storing the electricity created in the generator 9.

In an embodiment, the powertrain arrangement 100 comprises an electric cable 11 arranged for supplying electrical energy from an external power supply for use in the electric motor unit 3. Typically, said electrical energy is stored in a battery 10 and supplied therefrom to the electric motor unit 3. However, in other embodiments, the electric cable 11 is connected to the electric motor unit 3 without the battery 10.

The mobile work machine M of the Figure 1 has four wheels 13. The number of wheels may vary and instead of wheels, there may be different kind of mechanism for moving, for example a track arrangement.

In an embodiment, the inverter 15 is arranged to change direct current to alternating current that is then fed to the electric motor unit 3.
**Figure 2** is a schematic side view of another powertrain arrangement. Figure 2 shows one example of powertrain arrangement, wherein each of the cardan axles 6, 7 are arranged to drive the axle arrangements 1, 2 comprising only one axle. In this example the first cardan axle 6 is connected to and rotated by the first output shaft 4 and the second cardan axle 7 is connected to and rotated by the second output shaft 5 of the electric motor unit 3.

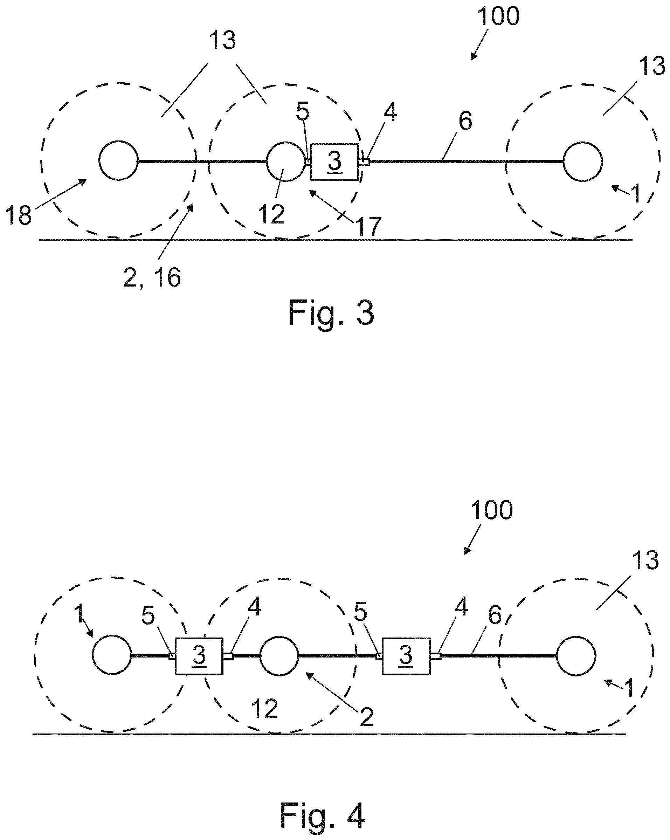

**Figure 3** is a schematic side view of a third powertrain arrangement of a mobile work machine. Figure 3 shows one example of powertrain arrangement, wherein at least one of the output shafts 4, 5 is arranged to drive at least two axles 17, 18.

In the shown embodiment, the second axle arrangement 2 comprises a tandem axle 16 having two axles.

In an embodiment, one of the output shafts 4, 5 is fixed straight to the axle arrangement, for instance to the differential 12 thereof, without any cardan axle. Said "straight-connected" axle arrangement may comprise one or more axles.

**Figure 4** is a schematic side view of a fourth powertrain arrangement of a mobile work machine. In an embodiment, the powertrain arrangement 100 comprises plurality of motors 3. In the shown embodiment, the arrangement 100 comprises two motors 3, each of which arranged to drive two axles by their output axles 4, 5.

In another embodiment, only one of the plurality of motors comprises two output shafts 3, 4, whereas a second or further electric motor(s) comprises just one output axle.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### REFERENCE SYMBOLS

- 1, 2: axle arrangement
- 3: electric motor unit
- 4, 5: output shaft
- 6, 7: cardan axle
- 8: combustion engine
- 9: electric generator
- 10: battery
- 11: electric cable
- 12: differential
- 13: wheel
- 14: hub
- 15: inverter
- 16: tandem axle
- 17, 18: axle

- 100: arrangement

- M: mobile work machine

## Claims

1. A powertrain arrangement of a mobile work machine (M), the arrangement (100) comprising
- a first and a second axle arrangements (1, 2), arranged transversely to a longitudinal axis of the work machine (M),
- an electric motor unit (3), comprising a first output shaft (4) in a first end of the electric motor unit (3), and a second output shaft (5) in a second end of the electric motor unit (3),
- the electric motor unit (3) being arranged between the first and the second axle arrangements (1, 2),
- the first axle arrangement (1) being connected to and rotated by the first output shaft (4), and
- the second axle arrangement (2) being connected to and rotated by the second output shaft (5).

2. The arrangement as claimed in claim 1, wherein at least one of the first and the second axle arrangements (1, 2) is connected to the output shaft (4, 5) by a cardan axle (6, 7).

3. The arrangement as claimed in claim 2, comprising
- a first and a second cardan axles (6, 7), wherein
- the first axle arrangement (1) being arranged to be rotated by the first cardan axle (6), and the second axle arrangement (2) arranged to be rotated by the second cardan axle (7), and wherein
- said first cardan axle (6) is connected to and rotated by the first output shaft (4) and
- said second cardan axle (7) is connected to and rotated by the second output shaft (5) of the electric motor unit (3) .

4. The arrangement as claimed in any of the preceding claims, wherein the cardan axle (6, 7) is arranged to drive one axle arrangement (1, 2) only.

5. The arrangement as claimed in any of the preceding claims, wherein at least one of the output shafts (4, 5) is arranged to drive an axle arrangement being a tandem axle (16) comprising at least two axles (17, 18).

6. The arrangement as claimed in any of the preceding claims, wherein the electric motor unit (3) comprises a through-shaft motor.

7. The arrangement as claimed in any of claims 1 - 5, wherein the electric motor unit (3) comprises two electric motors, both the motors having one output shaft (4, 5), the output shafts being arranged consecutively and coaxially in the motor unit.

8. The arrangement as claimed in any of the preceding claims, wherein the electric motor unit (3) comprises a permanent magnet motor.

9. The arrangement as claimed in any of claims 1 - 7, wherein the electric motor unit (3) comprises a reluctance motor.

10. The arrangement as claimed in any of claims 1 - 7, wherein the electric motor unit (3) comprises an induction motor.

11. The arrangement as claimed in any of the preceding claims, comprising a combustion engine (8) and an electric generator (9) arranged to create electricity for the electric motor unit (3).

12. The arrangement as claimed in any of the preceding claims, comprising a battery (10) for supplying electrical energy for the electric motor unit (3).

13. The arrangement as claimed in any of the preceding claims, comprising an electric cable (11) arranged for supplying electrical energy for use in the arrangement (100) .

14. The arrangement as claimed in any of the preceding claims, wherein the mobile work machine (M) is a mobile mining machine.
